Europäisches Patentamt

European Patent Office

Office européen des brevets

(19)

(11) Numéro de publication: **0 317 393**
A1

# (12) DEMANDE DE BREVET EUROPEEN

(21) Numéro de dépôt: 88402808.5

(22) Date de dépôt: 08.11.88

(51) Int. Cl.⁴: **C 01 F 7/68**
C 02 F 1/52

(30) Priorité: 16.11.87 FR 8715775

(43) Date de publication de la demande:
24.05.89 Bulletin 89/21

(84) Etats contractants désignés:
AT BE CH DE ES FR GB IT LI LU NL SE

(71) Demandeur: RHONE-POULENC CHIMIE
25, quai Paul Doumer
F-92408 Courbevoie Cédex (FR)

(72) Inventeur: Boutin, Jean
7, rue Buzy
F-69780 Mions (FR)

(74) Mandataire: Dubruc, Philippe et al
RHONE-POULENC INTERSERVICES Service Brevets
Chimie 25, quai Paul-Doumer
F-92408 Courbevoie Cédex (FR)

(54) Procédé de preparation d'un chlorosulfate d'aluminium basique.

(57) L'invention a trait à un procédé de préparation d'un chlorosulfate d'aluminium basique, du type comprenant une étape de préparation d'une bouillie de chlorure de calcium et de carbonate de calcium (bouillie chlorocarbonatée), une étape de mise en contact de la bouillie chlorocarbonatée avec du sulfate d'aluminium puis une étape de séparation du mélange réactionnel ainsi obtenu permettant de séparer d'une part un gâteau de sulfate de calcium et d'autre part une solution contenant le chlorosulfate d'aluminium basique désiré, et qui est caractérisé en ce qu'il consiste à ajouter dans ladite solution au moins un polyélectrolyte floculant du type non ionique ou cationique.

EP 0 317 393 A1

**Description**

# PROCEDE DE PREPARATION D'UN CHLOROSULFATE D ALUMINIUM BASIQUE

La présente invention a trait à un procédé de préparation d'un chlorosulfate d'aluminium basique.

Les chlorosulfates d aluminium basiques sont des produits bien connus qui trouvent une application toute particulière comme agents coagulants dans le traitement des milieux aqueux.

On connait ainsi par la demande de brevet européen publiée sous le n° 218 487 un procédé de fabrication permettant d'aboutir à des produits aux performances intéressantes. Ce procédé est caractérisé par la séquence d'étapes suivante :
- on forme d'abord une bouillie par mélange de chlorure de calcium et de carbonate de calcium,
- on fait réagir ensuite (en continu ou non) cette bouillie avec du sulfate d'aluminium,
- on filtre enfin le mélange réactionnel ainsi obtenu, ce par quoi on sépare un gâteau de sulfate de calcium et un filtrat contenant le chlorosulfate d'aluminium basique désiré.

Utilisés comme agents coagulants dans le traitement des milieux aqueux (par exemple effluents, eaux résiduaires, eaux usées, eaux potables, etc...), ces produits se sont avérés présenter des performances tout à fait remarquables tant au niveau de leur stabilité et de leur pouvoir coagulant et floculant qu'au niveau du taux particulièrement bas d'aluminium résiduel contenu dans les eaux traitées, et ceci pour une grande plage de pH.

Toutefois, comme indiqué dans la demande précitée, les solutions de chlorosulfate d'aluminium basique obtenues après filtration du milieu réactionnel peuvent présenter dans certains cas d'une part une couleur allant du brun très foncé au jaune, et d'autre part une turbidité très largement supérieure à une centaine d'unités NTU.

Cette turbidité qui peut être rédhibitoire est dûe à un taux de matières solides en suspension particulièrement élevé, notamment en ce qui concerne les fines de gypse qui ont traversé le filtre lors de l'étape de filtration, et il est probable que la forte coloration des solutions obtenues provient d'impuretés colorantes à base notamment de fer ou de substances humiques, la nature et la quantité de ces impuretés colorantes dans le produit final variant bien sûr suivant la qualité des matières premières utilisées.

Pour obvier à cet inconvénient, on a proposé dans la demande précitée d'ajouter, ensemble ou séparement, dans au moins une des étapes du procédé décrit mais toujours avant filtration, au moins un agent adsorbant et au moins un polyélectrolyte floculant du type non ionique ou cationique. L'agent adsorbant particulièrement recommandé est le charbon actif.

Une telle amélioration présente néanmoins plusieurs désavantages sérieux.

D'une part, elle nécessite l'emploi de charbon actif qui colore et pollue le gâteau de gypse formé lors de l'étape de filtration; il en résulte l'impossibilité d'une valorisation avale des quantités importantes de gypse récupérées, notamment pour l'industrie papetière.

D'autre part, elle nécessite une étape de filtration très soignée pour éviter que du charbon actif ne traverse les filtres et vienne colorer la solution finale de chlorosulfate d'aluminium basique ; on limite généralement ce second problème en forçant les quantités de polyélectrolyte introduites mais ceci bien entendu au détriment de l'économie du procédé.

Enfin, on a remarqué que les turbidités des solutions finales de chlorosulfate d'aluminium basique obtenues en fin de procédé, bien que déjà relativement faibles puisque de l'ordre d'une dizaine d'unités NTU, ne peuvent plus être abaissées de manière significative, même après une filtration et/ou une décantation prolongée ultérieures.

La présente invention a donc pour but de résoudre les problèmes ci-dessus et de proposer des moyens simples, efficaces, économiques et de mise en oeuvre aisée pour obtenir de manière fiable et reproductible des solutions de chlorosulfate d'aluminium basique à la fois incolores et de très faible turbidité, cette turbidité pouvant être inférieure à 5 unités NTU.

A cet effet, la Demanderesse a mis au point un procédé perfectionné de préparation de chlorosulfate d'aluminium basique, procédé du type comprenant une étape de préparation d'une bouillie de chlorure de calcium et de carbonate de calcium (bouillie chlorocarbonatée), une étape de mise en contact de la bouillie chlorocarbonatée avec du sulfate d'aluminium puis une étape de séparation du mélange réactionnel ainsi obtenu permettant de séparer d'une part un gâteau de sulfate de calcium et d'autre part une solution contenant le chlorosulfate d'aluminium basique désiré, et qui est caractérisé en ce qu'il consiste à ajouter dans ladite solution obtenue après séparation au moins un polyélectrolyte floculant du type non ionique ou cationique.

Le procédé selon l'invention, outre le fait qu'il permet de s'affranchir d'utiliser des agents adsorbants, notamment du charbon actif, et donc d'obvier aux inconvénients inhérents à une telle mise en oeuvre, permet également, de façon tout à fait inattendue et surprenante, d'aboutir à des solutions de chlorosulfate d'aluminium basique à la fois incolores et limpides (turbidité inférieure à 5 unités NTU) tout en réalisant des économies substantielles au niveau des quantités en agents floculants à utiliser.

Mais d'autres caractéristiques et avantages de l'invention apparaitront encore plus clairement à la lecture de la description qui va suivre et des exemples concrets, mais non limitatifs, relatifs à sa mise en oeuvre.

Le procédé selon l'invention se caractérise donc essentiellement par le fait que l'on ajoute un polyélectrolyte floculant du type non ionique ou cationique dans la solution obtenue après séparation des phases liquides et solides définies précédemment.

Les polyelectrolytes utilisés dans la présente invention sont des produits bien connus de l'homme de l'art. Il s'agit de polymères à haut poids moléculaire, lequel est généralement supérieur à un ou plusieurs millions.

Concernant les polyelectrolytes du type non ionique qui peuvent être utilisés dans la présente invention, on peut citer notamment les polyacrylamides, les polyoxydes d'éthylène, les polyvinylpyrrolidones et les alcools polyvinyliques.

Préférentiellement, on utilisera des polyacrylamides.

Les polyelectrolytes du type cationique susceptibles d'être employés dans la présente invention sont notamment :

- les polyamines neutres et les polyamines quaternaires. Plus précisement on peut citer les polyalkyleneamines et les polyhydroxyalkyleneamines, neutres ou quaternaires. A titre d'exemples conviennent particulièrement les homopolymères suivants : le polyethyleneamine, le polychlorure d'hydroxy-2-propyl-1-N-methylammonium, le polychlorure d'hydroxy-2-propyl-1, 1-N-dimethylammonium, le polyhydrogénosulfate de vinyl-2-imidazolinium, et le polychlorure de diallyl-dimethyl-ammonium. Convient également le copolymère formé par l'acrylamide et le chlorure de diallyl-dimethyl-ammonium.

- les polyaminoacrylates et les polyaminomethacrylates, et plus précisement les polydialkylaminoalkylacrylates et les polydialkylaminoalkylmethacrylates. A titre d'exemple, le poly-N, N-dimethylaminoethylmethacrylate, neutre ou quaternaire, convient bien, que ce soit sous la forme de l'homopolymère ou d'un copolymère avec l'acrylamide.

- les polyaminoacrylamides et les polyaminomethacrylamides, et plus précisement les polydialkylaminoalkyl acrylamides ou methacrylamides. A titre d'exemples, on peut citer les poly-N-dimethylaminopropylmetacrylamides et les poly-N-dimethylaminomethylacrylamides.

Bien sûr, cette liste de polyelectrolytes n'est donnée qu'à titre d'exemple et n'est nullement limitative. Tous les polyelectrolytes, pris seuls ou en mélanges, à l'exception de ceux du type anionique bien connus de l'homme de l'art, sont en effet susceptibles de convenir pour la mise en oeuvre de la présente invention.

Toutefois, on operera préférentiellement avec un polyelectrolyte de type non ionique car on a remarqué que ceux-ci permettaient d'aboutir aux meilleurs résultats et ceci en employant les doses les plus faibles.

La quantité d'agent floculant à introduire dépend bien sûr de la qualité désirée pour la solution finale de chlorosulfate d'aluminium basique. Cependant, on a remarqué de manière surprenante que dans tous les cas des doses particulièrement faibles d'agents floculants permettaient d'arriver au résultat recherché.

Pratiquement, on utilise des quantités comprises entre 0,1 et 5 g de polyélectrolytes par tonne de solution de chlorosulfate d'aluminium basique à traiter.

De préférence, cette quantité est comprise entre 0,1 et 3 g/t, et encore plus préférentiellement entre 0,3 et 2 g/t.

Comme indiqué ci-avant dans la description, le traitement selon l'invention s'applique à toute solution de chlorosulfate d'aluminium basique obtenue selon une technique consistant globalement à faire réagir sur du sulfate d'aluminium un mélange de chlorure de calcium et de carbonate de calcium, les quantités de départ en bouillie chlorocarbonatée et en sulfate d'aluminium étant classiquement ajustées en fonction de la stoechiométrie désirée pour le produit final.

On appliquera néanmoins plus avantageusement encore le procédé selon l'invention aux chlorosulfates d'aluminium basiques qui présentent une basicité (définie par convention comme le rapport équivalent OH / équivalent Al) comprise entre 0,4 et 0,65, de préférence comprise entre 0,4 et 0,6, un rapport équivalent Al / équivalent Cl compris entre 2,8 et 5, de préférence compris entre 3,2 et 4, et un taux de désulfatation (défini par convention comme le rapport de la quantité de sulfate éliminé à celle présente dans le sulfate d' aluminium de départ) compris entre 70 % et 90 %, de préférence comprise entre 70 % et 85 %.

Pour connaitre les différents modes et détails de mise en oeuvre relatifs à cette technique, l'homme de l'art pourra se reporter notamment au document EP-A- 218 487 cité ici à titre de référence.

A la suite du traitement selon l'invention, c'est à dire ajout d'un polyélectrolyte tel que défini ci-avant, on laisse décanter la solution de chlorosulfate d'aluminium basique jusqu'à obtenir une solution parfaitement limpide et incolore. Cette étape de décantation pourrait être éventuellement remplacée et/ou suivie par une étape de filtration, de manière à rendre les durées de mise en oeuvre du procédé selon l'invention plus compatibles avec les impératifs d'une conduite industrielle.

On constate enfin que les propriétés intrinsèques des chlorosulfates d'aluminium basiques ne sont pas perturbées et/ou modifiées par le traitement selon l'invention, notamment eu égard à leur pouvoir floculant.

Des exemples concrets illustrant l'invention vont maintenant être donnés.


EXEMPLE COMPARATIF 1

On attaque 288,16 g d'une craie industrielle à 33,8 % en poids d'OH⁻ commercialisée sous l'appelation "CM 100" par la société MEACOMYA, au moyen de 226,5 g d'HCl à 32,4 % en poids.

On ajoute progressivement la bouillie ainsi obtenue (mélange de $CaCl_2$ et $CaCO_3$) à 1500 g de sulfate d'aluminium titrant 8,3 % en poids d'$Al_2O_3$ et 0,32 % en poids d'OH⁻.

L'ajout de cette bouillie se fait sur une durée de 2 heures sous agitation modérée et à une température de 40°C.

Puis, on maintient le mélange réactionnel ainsi obtenu (chlorosulfate d' aluminium basique + gypse) sous agitation non cisaillante et à 40°C pendant 4 heures.

Puis, on laisse refroidir ce mélange réactionnel jusqu'à 16°C pendant 1 heure, toujours sous agitation.

On filtre sous vide (400 mmHg). On sépare ainsi gâteau de gypse et filtrat. On lave le gâteau avec de l'eau (186,5 g) de manière à récupérer finalement une solution de chlorosulfate d'aluminium basique titrant 9,16 % d'$Al_2O_3$ et présentant une basicité de 0,522 (analyse réalisée par potentiométrie sans oxalate) et un taux de désulfatation de 78,8 %.

On observe que la solution obtenue présente à l'oeil une couleur jaune très marquée ; son indice colorimétrique APHA (norme ASTM-D-2108-71) est de 230 ; sa turbidité est de 31 NTU.

EXEMPLES 2 A 5

On soumet la solution issue de l'exemple comparatif 1 à une floculation en jar test avec différentes doses de floculant. L'agent floculant utilisé est un polyélectrolyte non ionique du type polyacrylamide (poids moléculaire $> 10^6$) et commercialisé sous le nom de marque "FLOERGER 920 SH" par la société FLOERGER.

L'agent floculant est préalablement mis en solution aqueuse à une concentration de 1 g/l puis ajouté à la solution de chlorosulfate d'aluminium basique :

- agitation rapide : 2 mn à 180 t/mn
- agitation lente : 10 mn à 40 t/mn
- mesure de la turbidité du surnageant en fonction du temps de décantation.

La quantité de floculant introduite est exprimée en g par tonne de solution traitée. On a également indiqué la coloration de la solution, exprimée en indice APHA, après 69 heures de décantation. Un indice APHA inférieur à 100 correspond à des solutions quasiment incolores à l'oeil.

Les résultats sont reportés dans le tableau I ci-dessous.

TABLEAU I

| EXEMPLES | DOSE DE POLYELECTROLYTE | TURBIDITE NTU APRES X HEURES DE DECANTATION STATIQUE | | | | INDICE COLORIMETRIQUE APHA |
|---|---|---|---|---|---|---|
| | | 0 | 1H30 | 3H | 69 H | |
| 1 | 0 | 31 | 31 | 31 | 31 | 230 |
| 2 | 0,56 | 31 | 18,5 | 16,0 | 4,4 | < 100 |
| 3 | 1,13 | 31 | 14,5 | 12,5 | 3,9 | IDEM |
| 4 | 1,7 | 31 | 11,5 | 10,5 | 7,5 | IDEM |
| 5 | 2,26 | 31 | 11,0 | 8,5 | 7,8 | IDEM |

EP 0 317 393 A1

EXEMPLE COMPARATIF 6

On prépare une autre solution de chlorosulfate d'aluminium basique en suivant le mode opératoire de l'exemple 1.

Les produits utilisés sont les suivants :
- HCl à 32,4 % : 226,5 g
- craie industrielle "CM 100" à 33,6 % d'OH⁻: 289,9 g
- sulfate d'aluminium à 8,3 % en $Al_2O_3$ et 0,32 % en OH⁻ : 1500 g.

On obtient un chlorosulfate d'aluminium basique titrant 9,5 % d'$Al_2O_3$ et présentant une basicité de 0,53 (analyse réalisée au moyen d'une potentiométrie sans oxalate) et un taux de désulfatation de 79,7 %.

On observe que la solution présente à l'oeil une coloration jaune très marquée ; son indice colorimétrique APHA est de 300 ; sa turbidité est de 36 NTU.

EXEMPLES 7 A 10

On procède sur la solution issue de l'exemple comparatif 6 aux mêmes type d'essais que ceux décrits pour les exemples 2 à 5. Le polyelectrolyte utilisé est également le même. On a d'autre part indiqué la turbidité et la coloration APHA de la solution traitée après 18 heures de décantation puis filtration sur filtre GS WP millipore de 0,22 μm. Un indice APHA inférieur à 80 correspond à une solution incolore à l'oeil.

La filtration de la solution issue de l'exemple comparatif 6, même après décantation prolongée, est rendue impossible en raison d'un colmatage systématique du filtre dû à la finesse des particules en suspension.

Les résultats sont consignés dans le tableau II ci-dessous.

TABLEAU II

| EXEMPLES | DOSE DE POLYELECTROLYTE (g/t de solution traitée) | TURBIDITE NTU APRES X HEURES DE DECANTATION STATIQUE | | | | TURBIDITE ET COLORATION APHA APRES FILTRATION | |
|---|---|---|---|---|---|---|---|
| | | 0 H | 1 H | 2 H | 18 H | NTU | APHA |
| 6 | 0 | 36 | 36 | 36 | 36 | - | 150 |
| 7 | 0,5 | 36 | 32,5 | 28 | 21 | 1,75 | 62 |
| 8 | 1 | 36 | 26 | 22 | 17 | 1,75 | 58 |
| 9 | 2 | 36 | 17,5 | 15,5 | 15 | 1,9 | 66 |
| 10 | 4 | 36 | 30 | 25 | 15 | 2,1 | 77 |

EP 0 317 393 A1

## Revendications

1. Procédé de préparation d'un chlorosulfate d'aluminium basique, du type comprenant une étape de préparation d'une bouillie de chlorure de calcium et de carbonate de calcium (bouillie chlorocarbonatée), une étape de mise en contact de la bouillie chlorocarbonatée avec du sulfate d'aluminium puis une étape de séparation du mélange réactionnel ainsi obtenu permettant de séparer d'une part un gâteau de sulfate de calcium et d'autre part une solution contenant le chlorosulfate d'aluminium basique désiré, et qui est caractérisé en ce qu' il consiste à ajouter dans ladite solution au moins un polyélectrolyte floculant du type non ionique ou cationique.

2. Procédé selon la revendication 1 caractérisé en ce que le polyélectrolyte floculant est du type non ionique et choisi dans le groupe comprenant les polyacrylamides, les polyoxyde d'éthylène, les polyvinylpyrrolidones et les alcools polyvinyliques.

3. Procédé selon la revendication 2 caractérisé en ce que le polyélectrolyte floculant est une polyacrylamide.

4. Procédé selon la revendication 1 caractérisé en ce que le polyélectrolyte floculant est du type cationique et choisi dans le groupe comprenant les polyamines et les polyamines quaternisées.

5. Procédé selon l'une quelconque des revendications précédentes caractérisé en ce que l'on utilise une quantité comprise entre 0,1 et 5 grammes de polyélectrolyte par tonne de solution à traiter.

6. Procédé selon la revendication 5 caractérisé en ce que ladite quantité est comprise entre 0,1 et 3 grammes.

7. Procédé selon la revendication 6 caractérisé en ce que cette quantité est comprise entre 0,3 et 2 grammes.

8. Procédé selon l'une quelconques des revendications précédentes caractérisé en ce que la solution traitée par le polyélectrolyte floculant subit une filtration ultérieure.

9. Procédé selon l'une quelconques des revendications précédentes caractérisé en ce que les quantités de bouillie chlorocarbonatée et de sulfate d'aluminium sont ajustées de manière telle que l'on obtienne un chlorosulfate d'aluminium basique présentant une basicité comprise entre 0,4 et 0,65, de préférence entre 0,4 et 0,6, un rapport équivalent Al / équivalent Cl compris entre 2,8 et 5, de préférence compris entre 3,2 et 4 et un taux de désulfatation compris entre 70 et 90 %, de préférence compris entre 70 et 85 %.

## RAPPORT DE RECHERCHE EUROPEENNE

Office européen
des brevets

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | EP-A-0 218 487 (RHONE-POULENC) * En entier * --- | 1-9 | C 01 F 7/68 C 02 F 1/52 |
| Y | EP-A-0 145 686 (CARLSSON) * Revendications; page 3, lignes 24-36 * ----- | 1-9 | |

DOMAINES TECHNIQUES
RECHERCHES (Int. Cl.4)

C 01 F 7/00
C 02 F 1/00

Le présent rapport a été établi pour toutes les revendications

| Lieu de la recherche | Date d'achèvement de la recherche | Examinateur |
|---|---|---|
| LA HAYE | 22-02-1989 | ZALM W.E. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P0402)